# EUROPEAN PATENT SPECIFICATION

(11) **EP 2 327 568 B1**
(45) Date of publication and mention of the grant of the patent: **05.09.2012**
(21) Application number: 10192408.2
(22) Date of filing: 24.11.2010
(51) Int. Cl.: B60B 27/00

(54) **A hub bearing-hub carrier unit for high-performance motor vehicles**
Lagernaben-Trägereinheit für Hochleistungs-Motorfahrzeuge
Unité de porte-moyeu de roue / roulement de moyeu pour véhicules à moteur haute performance

(30) Priority: 28.11.2009 IT TO20090934
(43) Date of publication of application: 01.06.2011
(73) Proprietor: Aktiebolaget SKF, 415 50 Göteborg (SE)
(72) Inventor: Falsetti, Fabio, I-10137, TORINO (IT); Ferla, Alberto, I-10060, BRICHERASIO (Torino) (IT)
(74) Representative: Fioravanti, Corrado

(56) References cited:
- EP-A2- 1 213 156
- DE-A1- 19 510 035
- DE-A1- 19 638 842
- US-A- 5 366 300
- US-A1- 2006 033 381

## Description

The present invention relates to a hub bearing-hub carrier unit for high-performance motor vehicles.

Hub bearing-hub carrier units for high-performance motor vehicles generally comprise:
- a fixed hub carrier provided with a through cavity and with two cylindrical seats located at the opposite ends of the cavity;
- two rolling bearings, generally with oblique contact, each housed in a corresponding cylindrical seat in the hub carrier and kept a predetermined axial distance apart by a distance piece placed in an intermediate position between said bearings; and
- a hub inserted in the through cavity and supported by two bearings so as to rotate relative to the hub carrier and so as to support a corresponding wheel of the motor vehicle.

Hub bearing-hub carrier units for high-performance motor vehicles are generally distinguished from hub bearing-hub carrier units for normal vehicles by having two rolling bearings rather than one bearing with two rows of rolling elements, and by the fact that these two rolling bearings are not only separate and distinct from each other, but also kept apart from each other by the distance piece.

Because of the axial distance between the two bearings, and in order to make the hub bearing-hub carrier unit stiff, a preload device is fitted to the hub to preload the two bearings axially, and it is defined by a threaded nut that is screwed onto said hub to press against the inner rings of the two bearings, thus applying an axial load to them partly through the distance piece.

It will readily be appreciated that the axial dimensions of the distance piece significantly influence the design of the hub bearing-hub carrier unit of the kind described above since due attention must first and foremost be paid to the high sensitivity of these hub bearing-hub carrier units to the thermal variations of the operating temperature in particular, when the hub carrier is made of a material having a coefficient of expansion different from the coefficient of expansion of the metal of the bearings. Specifically, as the operating temperature rises, the hub carrier tends to expand both radially and axially, and this expansion immediately affects the two bearings because it has a more or less direct impact on the preload of said bearings and causes the operation of the entire hub bearing-hub carrier unit to be not correct and balanced.

DE 195 10 035 A1 discloses a hub bearing-hub carrier unit according to the preamble of claim 1. Other units are known from US 5 366 300 A, US 2006/033381 A1, and DE 196 38 842 A1.

It is an object of the present invention to provide a hub bearing-hub carrier unit for high-performance motor vehicles that is capable of maintaining virtually constant performance despite changes in the operating temperature.

The present invention provides a hub bearing-hub carrier unit for high-performance motor vehicles, as defined in claim 1. Preferred embodiments are defined in the dependent claims.

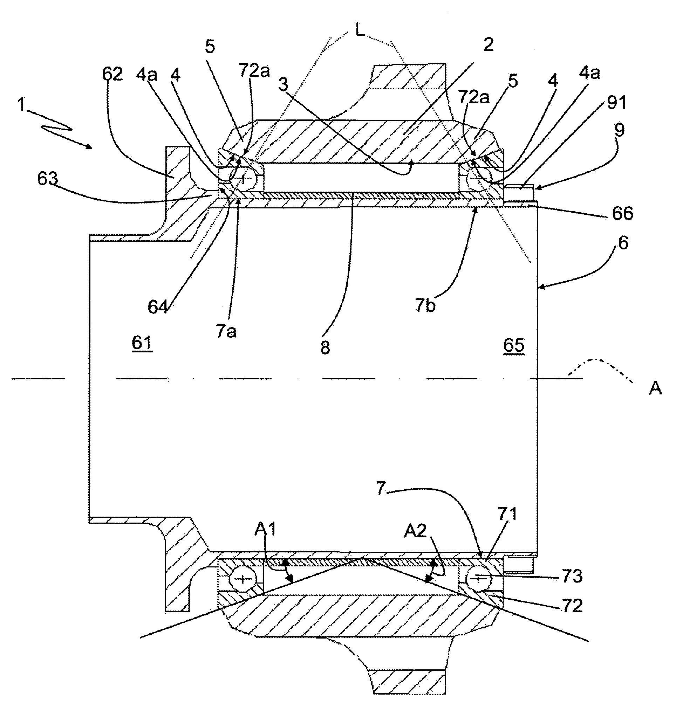

The invention will now be described with reference to the accompanying figure, which shows schematically and in cross-section a preferred, non-limiting exemplary embodiment of the invention.

Referring to the accompanying figure, reference number 1 designates in its entirety a hub bearing-hub carrier unit for high-performance motor vehicles.

The hub bearing-hub carrier unit 1 has an axis A of rotation and comprises a fixed hub carrier 2, which is preferably but not necessarily made of aluminium. The hub carrier 2 provides a through cavity 3 extending along the axis A, and two annular seats 4 at corresponding opposite ends 5 of the cavity 3. The seats are axially open to the outside with respect to the cavity 3.

The hub bearing-hub carrier unit 1 comprises a hub 6 inserted into the through cavity 3 and supported rotatably with respect to the hub carrier 2 by the interposition of two rolling bearings 7. The bearings 7, which are made of a metal with a coefficient of expansion that is different from a coefficient of expansion of the material of the hub carrier 2, are also part of the unit 1, and are of the oblique contact (or angular contact) type.

The hub 6 comprises, on a corresponding side 61 referred to as "outboard side", a connection flange 62 for a wheel (known and not shown), and a shoulder 63 which is axially adjacent to the flange 62 and has an annular stop surface 64 facing towards the cavity 3. The hub 6 further comprises, on a corresponding side 65 referred to as "inboard side", a threaded portion 66 which, together with the surface 64, defines an axial region in which the bearings 7 are mounted.

The two bearings 7 have a predetermined mean diameter P and are housed in the seats 4 of the hub carrier 2 in a so-called "O" configuration, meaning that they are arranged in such a way that their respective load lines L diverge towards the axis A. Also, one bearing 7a of the two bearings 7 is abutting axially against the shoulder 63, while one bearing 7b of the two bearings 7 is mounted on the threaded portion 66.

Each bearing 7 comprises a respective inner ring 71, a respective outer ring 72, and a respective plurality of rolling elements 73 interposed between the corresponding inner ring 71 and the corresponding outer ring 72. The inner ring 71 of the bearing 7a is axially abutting against the surface 64.

The hub bearing-hub carrier unit 1 further comprises a distance piece (or distance tube) 8 that is defined by a tubular body mounted on the hub 6 in an intermediate position between the inner rings 71 of the bearings 7, and keeps the bearings 7 apart from one another a predetermined axial distance D.

Lastly, the hub bearing-hub carrier unit 1 comprises a preload device 9 which is fitted to the hub 6 to preload the two bearings 7 axially. The unit 1 also comprises, on the other side of the threaded portion 66, a threaded nut 91 that is screwed onto said threaded portion 66 so as to be engaged axially against the inner ring 71 of the bearing 7b and to push against the inner rings 71, so transmitting an axial load to the said bearings 7, partly through the distance piece 8.

As the appended figure shows, the two annular seats 4 comprise respective contact surfaces 4a which define radially outwardly said seats 4, are surfaces of conical shape, and are inclined with respect to the axis A in the opposite direction to the load line L of the corresponding bearing 7. In other words, the contact surfaces 4a lie on respective cones located along the axis A with their respective vertices towards each other.

Similarly, the outer rings 72 of the bearings 7 also comprise respective contact surfaces 72a, which interface with the corresponding surfaces 4a by being placed in contact with said surfaces 4a, and are inclined with respect to the axis A in the same way as the surfaces 4a. In other words, also the surfaces 72a are of conical shape.

In the embodiment illustrated, the surfaces 72a completely cover the outer rings 72 of the bearings 7, which receive both radial and axial support from the surfaces 4a.

The surfaces 4a of both seats 4, and likewise the surfaces 72a of both bearings 7, subtend on the axis A respective angles A1 and A2 the amplitude of which is a function both of the diameter P of the bearings 7 and of the distance D between said bearings 7. The thermal expansion in both the radial and axial directions of the hub carrier 2 also depends on the amplitude(s) of angles A1 and A2.

In the illustrative embodiment shown, the amplitude of both angles A1 and A2 is 30°. More generally, the angles A1 and A2 must have an amplitude of less than 90°, and, in some cases, the amplitudes of the angles A1 and A2 may even be different from each other. More generally, at least the amplitude of one angle A1, A2 of the two angles A1, A2 must not be 90°.

The amplitude of the angles A1 and A2 can be varied by design as a function of the propensity of the seats 4 to deform in the axial and/or radial direction, depending partly on the overall geometry of the hub carrier 2, partly on the material of which the hub carrier 2 is made and its coefficient of thermal expansion, and partly on the dimensions of the diameters P and distance D.

In use, the preload on the bearings 7 is applied by screwing the nut 91 along the threaded portion 66 in order to progressively compress together the inner rings 71 and the distance piece 8 between the nut 91 and shoulder 63, as well as to compress the outer rings 72 on the surfaces 4a of the seats 4.

When the hub carrier 2 is undergoes thermal deformations that cannot be compensated by the thermal deformations experienced by the bearings 7, due in part to the different coefficient of thermal expansion, the geometry of construction of the seats 4 and bearings 7 allows the contact surfaces 4a to slide over the surfaces 72a. The result is that an almost constant axial/radial preload is maintained on the bearings 7.

In particular, due to raised operating temperature, the hub carrier 2, especially if made of an isotropic material such as aluminium, may be subjected to thermal expansion in both the radial and axial directions, where the thermal expansion in the radial direction is proportional to a dimension of the diameter P of the bearings 7 and proportional to the amplitude of the angles A1 and A2, while the thermal expansion in the axial direction is proportional to the distance D between said bearings 7 and, again, proportional to the amplitude of the angles A1 and A2.

If the expansion in the radial direction of the hub carrier 2 leads to an increase in the play between the seats 4 and the outer rings 72, the expansion in the axial direction of the hub carrier 2 leads to a reduction in the play between the seats 4 and the outer rings 72. This effect is obtained precisely because of the geometry of the contact surfaces 4a and 72a, the conical shape of which produces a sort of displacement of the points of the surfaces 4a over the surfaces 72a without creating any play and, significantly, without any modification to the value of the preload set by the nut 9.

It will be clear from the above description that the geometry of the contact surfaces 4a and 72a ensures a constant axial preload on the bearings 7; in other words it ensures that optimal operational performance of the hub bearing-hub carrier unit 1 is maintained.

It will be understood that the invention is not limited to the embodiment described and illustrated herein, which is to be considered as an exemplary embodiment of the hub bearing-hub carrier unit for high-performance motor vehicles. Rather, the invention is open to further modification of the shapes and arrangements of parts, and of details of construction and assembly.

## Claims

1. A hub bearing-hub carrier unit (1) for high-performance motor vehicles, the hub bearing-hub carrier (1) having an axis (A) of rotation and comprising:
- a hub carrier (2) with two annular seats (4);
- two rolling bearings (7), each housed in a corresponding seat (4) in the hub carrier (2), the two bearings (7) being kept a predetermined axial distance (D) apart and being subjected to an axial preload; and
- a hub (6) inserted through the hub carrier (2) and supported by the two bearings (7) so as to rotate relative to the hub carrier (2);
wherein both of the seats (4) and the corresponding bearings (7) comprise respective surfaces (4a, 72a) of mutual contact, which are conical surfaces inclined with respect to the axis (A) of rotation in the opposite direction to the load lines (L) of the respective bearings (7);
**characterized in that** the contact surfaces (72a) of the bearings are formed by respective outer rings (72) of said bearings.

2. A hub bearing-hub carrier unit according to claim 1, **characterized in that** the load lines (L) of the two bearings (7) diverge towards the axis (A) of rotation.

3. A hub bearing-hub carrier unit according to claim 2, **characterized in that** the angles (A1, A2) subtended by the contact surfaces (72a) of the two bearings (7) have an amplitude of less than 90°.

4. A hub bearing-hub carrier unit according to claim 3, **characterized in that** the contact surfaces (72a) of the two bearings (7) subtend at the axis (A) of rotation respective angles (A1, A2) whose amplitudes are equal to each other.

5. A hub bearing-hub carrier unit according to any one of claims 1 to 4, **characterized in that** the outer rings (72) being defined on the radially outward side by a contact surface (72a) for an entire corresponding axial width of the bearings (7).

6. A hub bearing-hub carrier unit according to any one of the preceding claims, **characterized in that** the hub carrier (2) is made from a material different from a material of said bearings (7), and is preferably made from an isotropic material.

7. A hub bearing-hub carrier unit according to any one of the preceding claims, **characterized in that** a coefficient of thermal expansion of the material of the hub carrier (2) is different from a coefficient of thermal expansion of the material of the bearings (7).

8. A hub bearing-hub carrier unit according to claim 7, **characterized in that** the hub carrier (2) is made of aluminium.

## Patentansprüche

1. Nabenlager-Nabenträger-Einheit (1) für Hochleistungskraftfahrzeuge, wobei der Nabenlager-Nabenträger (1) eine Drehachse (A) hat und Folgendes umfasst:
- einen Nabenträger (2) mit zwei ringförmigen Sitzen (4),
- zwei Wälzlager (7), die jeweils in einem entsprechenden Sitz (4) in dem Nabenträger (2) untergebracht sind, wobei die zwei Lager (7) um einen vorbestimmten axialen Abstand (D) getrennt gehalten werden und einer axialen Vorbelastung unterworfen sind, und
- eine Nabe (6), die durch den Nabenträger (2) eingesetzt und durch die zwei Lager (7) getragen wird, so dass sie sich im Verhältnis zu dem Nabenträger (2) dreht,
wobei sowohl die Sitze (4) als auch die entsprechenden Lager (7) jeweilige Flächen (4a, 72a) einer gegenseitigen Berührung umfassen, die konische Flächen sind, geneigt in Bezug auf die Drehachse (A) in der Richtung, entgegengesetzt zu den Lastlinien (L) der jeweiligen Lager (7),
**dadurch gekennzeichnet, dass** die Berührungsflächen (72a) der Lager durch jeweilige äußere Ringe (72) der Lager gebildet werden.

2. Nabenlager-Nabenträger-Einheit nach Anspruch 1, **dadurch gekennzeichnet, dass** die Lastlinien (L) der zwei Lager (7) zu der Drehachse (A) hin zusammenlaufen.

3. Nabenlager-Nabenträger-Einheit nach Anspruch 2, **dadurch gekennzeichnet, dass** die durch die Berührungsflächen (72a) der zwei Lager (7) eingeschlossenen Winkel (A1, A2) eine Größe von weniger als 90° haben.

4. Nabenlager-Nabenträger-Einheit nach Anspruch 3, **dadurch gekennzeichnet, dass** die Berührungsflächen (72a) der zwei Lager (7) an der Drehachse (A) jeweilige Winkel (A1, A2) einschließen, deren Größen einander gleich sind.

5. Nabenlager-Nabenträger-Einheit nach einem der Ansprüche 1 bis 4, **dadurch gekennzeichnet, dass** die äußeren Ringe (72) auf der in Radialrichtung äußeren Seite durch eine Berührungsfläche (72a) für eine gesamte entsprechende axiale Breite der Lager (7) definiert werden.

6. Nabenlager-Nabenträger-Einheit nach einem der vorhergehenden Ansprüche, **dadurch gekennzeichnet, dass** der Lagerträger (2) aus einem Werkstoff hergestellt ist, der sich von einem Werkstoff der Lager (7) unterscheidet, und vorzugsweise aus einem isotropen Werkstoff hergestellt ist.

7. Nabenlager-Nabenträger-Einheit nach einem der vorhergehenden Ansprüche, **dadurch gekennzeichnet, dass** sich ein Wärmeausdehnungskoeffizient des Werkstoffs des Nabenträgers (2) von einem Wärmeausdehnungskoeffizienten des Werkstoffs der Lager (7) unterscheidet.

8. Nabenlager-Nabenträger-Einheit nach Anspruch 7, **dadurch gekennzeichnet, dass** der Nabenträger (2) aus Aluminium hergestellt ist.

## Revendications

1. Unité (1) de roulement de moyeu / porte-moyeu pour véhicules à moteur hautes performances, l'unité (1) de roulement de moyeu / porte-moyeu présentant un axe (A) de rotation et comportant :
- un porte-moyeu (2) doté de deux portées annulaires (4) ;
- deux roulements (7), chacun logé dans une portée (4) du porte-moyeu (2), les deux roulements (7) étant maintenus à une distance axiale prédéterminée (D) l'un de l'autre et étant soumis à une précharge axiale ; et
- un moyeu (6) inséré à travers le porte-moyeu (2) et porté par les deux roulements (7) de façon à tourner par rapport au porte-moyeu (2) ;
les deux portée (4) et les roulements (7) correspondants comportant des surfaces (4a, 72a) respectives de contact mutuel, qui sont des surfaces coniques inclinées par rapport à l'axe (A) de rotation dans le sens opposé aux lignes (L) de charge des roulements (7) respectifs ;
**caractérisé en ce que** les surfaces (72a) de contact des roulements sont formées par des bagues extérieures (72) respectives desdits roulements.

2. Unité de roulement de moyeu / porte-moyeu selon la revendication 1, **caractérisée en ce que** les lignes (L) de charge des deux roulements (7) divergent en direction de l'axe (A) de rotation.

3. Unité de roulement de moyeu / porte-moyeu selon la revendication 2, **caractérisée en ce que** les angles (A1, A2) sous-tendus par les surfaces (72a) de contact des deux roulements (7) ont une amplitude inférieure à 90°.

4. Unité de roulement de moyeu / porte-moyeu selon la revendication 3, **caractérisée en ce que** les surfaces (72a) de contact des deux roulements (7) sous-tendent à l'axe (A) de rotation des angles (A1, A2) respectifs dont les amplitudes sont égales entre elles.

5. Unité de roulement de moyeu / porte-moyeu selon l'une quelconque des revendications 1 à 4, **caractérisée en ce que** les bagues extérieures (72) sont définies du côté radialement extérieur par une surface (72a) de contact sur la totalité d'une largeur axiale correspondante des roulements (7).

6. Unité de roulement de moyeu / porte-moyeu selon l'une quelconque des revendications précédentes, **caractérisée en ce que** le porte-moyeu (2) est constitué d'un matériau différent d'un matériau desdits roulements (7), et est de préférence constitué d'un matériau isotrope.

7. Unité de roulement de moyeu / porte-moyeu selon l'une quelconque des revendications précédentes, **caractérisée en ce qu'**un coefficient de dilatation thermique du matériau du porte-moyeu (2) est différent d'un coefficient de dilatation thermique du matériau des roulements (7).

8. Unité de roulement de moyeu / porte-moyeu selon la revendication 7, **caractérisée en ce que** le porte-moyeu (2) est constitué d'aluminium.
